Europäisches Patentamt

**European Patent Office**

Office européen des brevets

(11) Numéro de publication : **0 054 478**
**B1**

# (12) FASCICULE DE BREVET EUROPÉEN

(45) Date de publication du fascicule du brevet :
26.03.86

(51) Int. Cl.⁴ : **H 02 G   3/24**

(21) Numéro de dépôt : **81401953.5**

(22) Date de dépôt : **08.12.81**

(54) **Dispositif pour le support d'objets allongés tels que câbles, faisceaux de câbles ou analogues.**

(30) Priorité : **15.12.80 FR 8026570**

(43) Date de publication de la demande :
**23.06.82 Bulletin 82/25**

(45) Mention de la délivrance du brevet :
**26.03.86 Bulletin 86/13**

(84) Etats contractants désignés :
**BE DE GB IT NL SE**

(56) Documents cités :
**FR-A- 1 039 583**
**FR-A- 1 123 839**
**FR-A- 2 042 142**
**FR-A- 2 311 243**
**FR-A- 2 370 375**
**US-A- 3 632 069**

(73) Titulaire : **SOCIETE NATIONALE INDUSTRIELLE**
**AEROSPATIALE**
**37 boulevard de Montmorency**
**F-75016 Paris Cedex 16 (FR)**

(72) Inventeur : **Godenzi, Edmond**
**Chemin des Ambrits Cornebarrieu**
**F-31700 Blagnac (FR)**
Inventeur : **Lacotte, Georges**
**12 Allée du Château**
**F-31770 Colomiers (FR)**

(74) Mandataire : **Bonnetat, Christian et al**
**Cabinet PROPI Conseils 23 rue de Léningrad**
**F-75008 Paris (FR)**

Jouve, 18, rue St-Denis, 75001 Paris, France

## Description

La présente invention concerne un dispositif pour le support d'objets allongés, tels que câbles, faisceaux de câbles, tubes, gaines ou analogues, comportant au moins un berceau formant un logement au moins approximativement en forme de V ouvert vers l'extérieur et servant d'appui transversal auxdits objets, un moyen de serrage desdits objets, tel qu'un collier, étant relié audit berceau.

Un dispositif de ce type est par exemple connu par le brevet US-A-3 632 069. Dans ce dispositif connu, le berceau est constitué d'un profilé en forme de gouttière et le moyen de serrage est un collier souple enserrant ledit profilé. Il en résulte que ledit collier est maintenu écarté à sa base par les ailes en V dudit profilé et que ledit dispositif ne peut être utilisé pour une large gamme de diamètre desdits objets.

En effet, un tel dispositif prévu pour serrer un faisceau de 30 mm de diamètre par exemple, ne pourra pas fixer de façon satisfaisante, un faisceau de 10 mm de diamètre. Il est donc nécessaire de changer de support en fonction du diamètre du faisceau. Ceci présente de nombreux inconvénients ; en effet, lors de l'étude d'une installation électrique à bord d'un avion, par exemple, on est généralement dans l'impossibilité de connaître avec certitude le diamètre des faisceaux de câbles à implanter. Il en résulte qu'au moment de la mise en place de l'installation électrique, si l'on est obligé de changer le dispositif de support qui était prévu, il est nécessaire de modifier les moyens d'implantation de ces supports sur les parois. Les difficultés d'installation sont donc augmentées.

La présente invention a pour objet de remédier aux inconvénients des supports connus. Elle concerne un dispositif offrant la possibilité de fixer fermement des faisceaux de câbles de diamètres très différents, sans cisaillement de ces câbles.

A cette fin, selon l'invention, le dispositif pour le support d'objets allongés du type décrit ci-dessus est caractérisé en ce que ledit berceau est constitué de deux faces, parallèles entre elles et transversales auxdits objets allongés, comportant chacune une ouverture en forme de V, en ce que lesdites ouvertures sont alignées, en ce qu'une entretoise relie lesdites faces et se prolonge à l'intérieur desdites échancrures en forme de V, pour en obturer la partie pointue, de façon à former une surface d'appui continue pour lesdits objets sur toute la largeur dudit berceau, et en ce que ledit collier de serrage prend appui autour de ladite entretoise entre lesdites faces.

Ainsi, le dispositif selon l'invention peut s'adapter à des diamètres de faisceaux de conducteurs très différents, puisque ledit collier prend appui sur l'entretoise.

Ledit collier de serrage peut donc maintenir aussi bien des objets reposant uniquement sur ladite entretoise que des objets reposant à la fois sur l'entretoise et sur les parois obliques des échancrures en V.

De préférence, la surface d'appui continue présente un profil arrondi, convexe en direction de l'ouverture desdites échancrures.

Il est avantageux que la partie de ladite entretoise opposée à l'ouverture des échancrures soit également arrondie et convexe.

La section de ladite entretoise peut être circulaire, elliptique, ovale ou analogue, de façon à encore favoriser le serrage de câbles ou faisceaux de câbles de diamètres très différents.

Un dispositif selon l'invention peut comporter une pluralité de berceaux parallèles et reliés les uns aux autres par des languettes de liaison servant à la fixation dudit dispositif sur une paroi. Un tel dispositif peut être réalisé en une seule pièce, par exemple en polyamide.

Ainsi, la présente invention est particulièrement adaptée à la réalisation d'installations électriques ou électroniques comportant des conducteurs ou faisceaux de conducteurs reliant entre eux des appareillages éloignés, et notamment une telle installation montée à bord d'un aéronef.

On remarquera que le brevet FR-A-1 039 583 décrit un dispositif de fixation de conducteurs d'un type très différent de celui de l'invention, mais dans lequel il est prévu une entretoise qui relie des joues latérales, lesdits conducteurs s'appuyant sur cette entretoise et ces joues latérales.

Les figures du dessin annexé feront bien comprendre comment l'invention peut être réalisée.

La figure 1 est une vue en élévation, avec arrachement partiel correspondant à la ligne I-I de la figure 2, d'un exemple de réalisation du dispositif de support selon l'invention.

La figure 2 est une vue de dessus de l'exemple de réalisation de la figure 1.

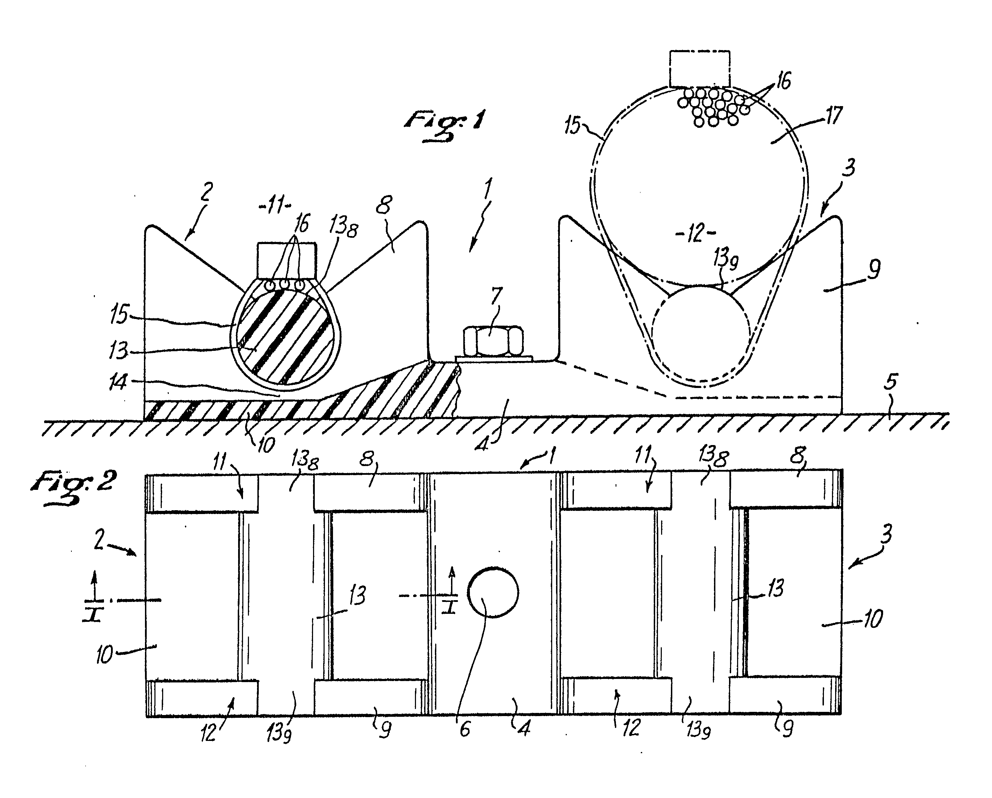

Le dispositif 1 selon l'invention, illustré par les figures 1 et 2, comporte deux berceaux de support et de fixation identiques 2 et 3, reliés entre eux par une languette 4. Les berceaux 2 et 3 et la languette 4 forment une seule pièce, par exemple de polyamide moulé.

En vue de la fixation du dispositif 1 sur une paroi 5 (uniquement illustrée sur la figure 1), la languette 4 est percée d'au moins un trou 6 (figure 2) pour une vis 7 (figure 1).

Chaque berceau 2 ou 3 comporte deux faces 8 et 9, parallèles entre elles et orthogonales à la paroi 5 ; ces faces 8 et 9 sont reliées entre elles par un fond 10 destiné à s'appliquer sur la paroi 5.

Les faces 8 et 9 comportent des échancrures 11 et 12 en forme de V, ouvertes du côté opposé au fond 10, les deux échancrures 11 et 12 des deux parois d'un berceau 2 ou 3 étant alignées.

De plus, les faces 8 et 9 d'un berceau sont reliées entre elles par une entretoise 13, par exemple de forme cylindrique, disposée de façon à ménager, d'un côté un espace libre 14 entre elle et le fond 10 et à faire saillie, de l'autre côté, au-delà des pointes des échancrures 11 et 12, en direction de l'ouverture desdites échancrures.

Ainsi, le fond des échancrures 11 et 12, au lieu d'être pointu, peut être formé par un bossage convexe $13_8$ ou $13_9$ respectivement, constitué par la partie correspondante de l'entretoise 13, pénétrant à l'intérieur des échancrures 11 et 12.

On comprendra aisément que de cette façon, lorsque l'on dispose des câbles ou des tubes dans les échancrures des berceaux 2 et 3, ces câbles ou tubes reposent au moins en partie, sur toute la largeur de ces berceaux, sur la surface extérieure arrondie de l'entretoise 13, même à l'emplacement des échancrures 11 et 12, de sorte que tout risque de cisaillement de ces câbles ou tubes est éliminé.

Par ailleurs, comme l'illustre schématiquement la figure 1, il est possible, avec le dispositif selon l'invention, de fixer des câbles ou des tubes de dimensions et de nombres très différents, en utilisant un collier de serrage 15 enserrant l'entretoise 13, en passant à travers l'espace 14.

Lorsque, comme illustré à propos du berceau 2, seuls quelques petits câbles 16 doivent être fixés, ceux-ci peuvent reposer uniquement sur l'entretoise 13 (et notamment sur ses portions $13_8$ et $13_9$ à l'emplacement des échancrures 11 et 12).

En revanche, lorsque comme illustré à propos du berceau 3, les câbles 16 forment un faisceau 17 de grand diamètre, ce faisceau 17 repose non seulement sur l'entretoise 13, mais encore sur les faces inclinées des échancrures 11 et 12.

Dans ce cas, les câbles 16 appliqués contre les faces des échancrures 11 et 12 ne subissent aucun effet de cisaillement, puisque la partie inférieure du faisceau 17 est supportée par l'entretoise 13.

Quoique, dans la présente description, on ait mentionné que, de préférence, le dispositif selon l'invention est réalisé en polyamide, il va de soi que cette précision n'est pas limitative et que le dispositif selon l'invention peut être avantageusement réalisé à l'aide de tout matériau injectable ou pouvant être coulé et/ou moulé.

## Revendications

1. Dispositif pour le support d'objets allongés (16, 17) tels que câbles, faisceaux de câbles, tubes, gaines ou analogues, comportant au moins un berceau (2, 3) formant un logement au moins approximativement en forme de V ouvert vers l'extérieur et servant d'appui transversal auxdits objets, un moyen de serrage (15) desdits objets, tels qu'un collier, étant relié audit berceau, caractérisé en ce que ledit berceau (2, 3) est constitué de deux faces (8, 9), parallèles entre elles et transversales auxdits objets allongés, comportant chacune une ouverture (11, 12) en forme de V, en ce que lesdites ouvertures (11, 12) sont alignées, en ce qu'une entretoise (13) relie lesdites faces (8, 9) et se prolonge (en $13_8$, $13_9$) à l'intérieur desdites échancrures (11, 12) en forme de V, pour en obturer la partie pointue, de façon à former une surface d'appui continue pour lesdits objets sur toute la largeur dudit berceau, et en ce que ledit collier de serrage (15) prend appui autour de ladite entretoise (13) entre lesdites faces (8, 9).

2. Dispositif selon la revendication 1, caractérisé en ce que ladite surface d'appui continue présente un profil arrondi, convexe en direction de l'ouverture desdites échancrures (11, 12).

3. Dispositif selon l'une quelconque des revendications 1 ou 2, caractérisé en ce que la partie de l'entretoise opposée à l'ouverture des échancrures est également arrondie et convexe.

4. Dispositif selon l'une quelconque des revendications 2 et 3, caractérisé en ce que la section de ladite entretoise (13) est circulaire, elliptique, ovale ou analogue.

5. Dispositif selon l'une quelconque des revendications 1 à 4, caractérisé en ce qu'il comporte une pluralité de berceaux (2, 3) parallèles et reliés les uns aux autres par des languettes de liaison (4) servant à la fixation dudit dispositif sur une paroi (5).

6. Dispositif selon l'une quelconque des revendications 1 à 5, caractérisé en ce qu'il est réalisé en une seule pièce.

7. Dispositif selon la revendication 6, caractérisé en ce qu'il est réalisé en polyamide.

## Claims

1. Device for supporting elongated objects (16, 17) such as cables, bundles of cables, tubes, sheaths or the like, comprising at least one cradle (2, 3) forming an housing with an at least approximately shape of an outwardly open V, said housing being used as transverse support for said objects, a means (15) for clamping said objects, such a clamp, being connected to said cradle, characterized in that said cradle (2, 3) is constituted by two parallel faces (8, 9), which are transverse to said elongated objects and each comprises a V-notch (11, 12), in that said notches (11, 12) are aligned, in that a spacer (13) connects said faces (8, 9) and extends (at $13_8$, $13_9$) inside said V-notches (11, 12) to obturate the pointed part thereof, so as to form a continuous support face for said objects over the whole width of said cradle, and in that said clamp (15) abuts around said spacer (13) between said faces (8, 9).

2. The device of Claim 1, characterized in that said continuous support face presents a rounded section, convex in the direction of opening of said notches (11, 12).

3. The device of either one of Claims 1 or 2, characterized in that the part of the spacer opposite the opening of the notches is also rounded and convex.

4. The device of either one of Claims 2 and 3, characterized in that the section of said spacer (13) is circular, elliptic, oval or the like.

5. The device of one of Claims 1 to 4, characterized in that it comprises a plurality of parallel cradles (2, 3) connected to one another by connecting tongues (4) serving to fix said device on a wall.

6. The device of one of Claims 1 to 5, characterized in that it is made in one piece.

7. The device of Claim 6, characterized in that it is made of polyamide.

**Patentansprüche**

1. Vorrichtung zum Tragen von länglich geformten Gegenständen wie Kabel, Kabelbäume oder -stränge, Röhren, Hüllrohre oder dgl. bestehend aus zumindest einem Träger (2, 3), der als Aufnahmeeinrichtung mit zumindest annähernd nach außen offener V-förmiger Ausgestaltung ausgebildet ist und den Gegenständen als Querstütze dient, und aus einer Spanneinrichtung (15) für die Gegenstände, die wie eine Schelle mit dem Träger verbunden ist, dadurch gekennzeichnet, daß der Träger zwei Seiten (8, 9) besitzt, die zueinander parallel und zu den Längsgegenständen transversal verlaufen sowie jeweils eine V-förmige Öffnung (11, 12) aufweisen, daß diese Öffnungen ausgerichtet sind, daß ein Steg oder Abstandsstück (13) die Seiten (8, 9) miteinander verbindet und sich in Verlängerung ($13_8$, $13_9$) zum Innern der V-förmigen Öffnungen (11, 12) erstreckt, um den spitzlaufenden Teil derart abzuschließen, daß für die Gegenstände auf der gesamten Breite des Trägers eine kontinuierliche Stützfläche gebildet wird, und daß sich die Spann- oder Klemmschelle (15) um den Steg oder das Abstandsstück (13) zwischen den Seiten (8, 9) anlegt.

2. Vorrichtung nach Anspruch 1, dadurch gekennzeichnet, daß die kontinuierliche Stützfläche ein Rundprofil darstellt, das in Öffnungsrichtung der Aussparungen (11, 12) konvex ausgebildet ist.

3. Vorrichtung nach einem der Ansprüche 1 oder 2, dadurch gekennzeichnet, daß der der Öffnung der Aussparungen gegenüberliegende Teil des Stegs oder Abstandsstückes ebenfalls abgerundet und konvex ausgebildet ist.

4. Vorrichtung nach einem der Ansprüche 2 und 3, dadurch gekennzeichnet, daß der Schnitt des Stegs oder Abstandstücks (13) kreisförmig, elliptisch, oval oder analog ausgebildet ist.

5. Vorrichtung nach einem der Ansprüche 1 bis 4, gekennzeichnet durch mehrere Träger (2, 3), die parallel zu einander liegen und miteinander durch Verbindungsleisten (4) verbunden sind, mit denen die Vorrichtung zweckmäßig an einer Wand (5) befestigt werden kann.

6. Vorrichtung nach einem der Ansprüche 1 bis 5, dadurch gekennzeichnet, daß sie in einem Stück ausgebildet ist.

7. Vorrichtung nach Anspruch 6, dadurch gekennzeichnet, daß sie aus Polyamid gefertigt ist.

*Fig:1*

*Fig:2*

0 054 478